## Europäisches Patentamt
## European Patent Office
## Office européen des brevets

(19)

(11) Veröffentlichungsnummer: **0 192 922**
**B1**

(12)

# EUROPÄISCHE PATENTSCHRIFT

(45) Veröffentlichungstag der Patentschrift: 04.04.90

(51) Int. Cl.⁵: **F 16 L 11/08**

(21) Anmeldenummer: 85890313.1

(22) Anmeldetag: 17.12.85

(54) Schlauch zum Fördern heisser Medien, wie Heissbitumen, Teer oder Asphalt.

(30) Priorität: 25.02.85 AT 547/85

(43) Veröffentlichungstag der Anmeldung:
03.09.86 Patentblatt 86/36

(45) Bekanntmachung des Hinweises auf die
Patenterteilung:
04.04.90 Patentblatt 90/14

(84) Benannte Vertragsstaaten:
AT BE CH DE FR GB IT LI LU NL SE

(56) Entgegenhaltungen:
DE-B-1 037 218
DE-U-7 706 884
DE-U-7 805 820
US-A-4 330 017

W. HOFMANN "Kautschuk-Technologie", 1980,
Seiten 166-173, Gentner Verlag, Stuttgart;
H. SAECHTLING "International Plastics
Handbook Saechtling", 1983, Seiten 154-155,
Hanser Verlag, München;
Lueger "Lexikon der Bautechnik", 1966, S. 215
(73) Patentinhaber: **Semperit Aktiengesellschaft**
**Modecenterstrasse 22**
**A-1031 Wien (AT)**

(72) Erfinder: **Donauer, Albert**
**Industriestrasse 162**
**A-1220 Wien (AT)**

(74) Vertreter: **Müller, Hans-Jürgen, Dipl.-Ing. et al**
**Müller, Schupfner & Gauger Lucile-Grahn-**
**Strasse 38 Postfach 80 13 69**
**D-8000 München 80 (DE)**

## Beschreibung

Die Erfindung bezieht sich auf die Verwendung eines Verbundschlauches als Förderschlauch für Heißbitumen, Asphalt und Teer.

Es ist ein Verbundschlauch, bestehend aus einer Schlauchseele aus einer Elastomermischung auf der Basis eines Ethylen-Acrylat-Elastomers (EAE), einer eingebetteten offenmaschigen Verstärkung aus Glasfasern, Baumwollfasern, Polyesterfasern, Polyamidfasern oder dergleichen sowie einer Schlauchdecke aus elastomerem Material, wie Epichlorhydrinkautschuk oder Ethylen-Acryl-Kautschuk, bekannt (US—A—4 330 017), der für Kraftstoffleitungen für Automobile verwendet wird. Dabei wird die Schlauchseele innen mit einem Überzug aus Fluorkautschuk versehen. Sofern mit diesem Schlauch Medien unter höheren Temperaturen befördert werden, lassen die Eigenschaften, insbesondere Dauerstandseigenschaften, jedoch zu wünschen übrig.

Darüber hinaus sind hitzebeständige Druckschläuche bekannt (DE—U—7 706 884), bei denen eine aus Glas oder Asbestfasern bestehende Verstärkung zwischen die Schlauchseele und die Schlauchdecke eingefügt ist, die jeweils aus EPDM-Kautschuk bestehen. Um hohen Temperaturen standzuhalten, werden zusätzlich eine weitmaschige Verstärkungseinlage aus Stahldraht sowie zwei getrennt voneinander in Kautschuk eingebettete Gewebeschichten aus den Asbest oder Glasfasern verwendet. Mit diesen Schläuchen wird Heißdampf transportiert, doch ergeben sich beim Transport heißer aggressiver Materialien nach längerer Betriebsdauer Schwierigkeiten.

Schließlich ist es auch bekannt, daß Ethylen-Acrylat-Kautschuk unter dem Einfluß des Ethylen eine hohe Kälteflexibilität aufweist, gegenüber ethylenfreien Polyacrylaten jedoch geringere Ölbeständigkeit besitzt (W. Hofmann "Kautschuk-Technologie", 1980, Seiten 166 bis 168).

Zum Fördern von heißen flüssigen Medien, wie Heißbitumen oder Teer, werden nun besonders hohe Anforderungen an solche Verbundschläuche gestellt. Einerseits soll die Schlauchseele eine hohe chemische Beständigkeit gegen die durchfließenden Medien aufweisen, andererseits soll auch der gesamte Verbundkörper des Schlauches hohe Temperaturbeständigkeit aufweisen. Bei der Schlauchdecke kommt es neben der hohen Temperaturbeständigkeit auch auf Beständigkeit gegen starke Temperaturschwankungen an; der Schlauch soll sich durch hohe Witterungs- und Ozonbeständigkeit auszeichnen. Derartig für Bitumen- und Teerspritzanlagen verwendete Schläuche sind bereits bekannt (Lueger, Lexikon der Bautechnik, 1966, Seite 215). Dabei besteht die Schlauchseele aus einer Nitryl-Kautschukmischung, während die Schlauchdecke eine Chloropren-Kautschukmischung aufweist. Die Verstärkung weist eine in Nitryl-Kautschuk eingebettete Wendel — gelegentlich auch als "Spirale" bezeichnet — aus Stahl sowie zwei gummierte Kordgewebelagen auf. Obwohl der Nitrylkautschuk eine gute chemische Beständigkeit gegenüber dem Fördergut aufweist, läßt die Langzeitbeständigkeit bei hohen Temperaturen in der Größenordnung von 230°C und höher zu wünschen übrig. Außerdem wird die Schlauchdecke bei höheren Temperaturen relativ schnell hart und brüchig, weshalb derartige Schläuche keine lange Lebensdauer aufweisen und bereits nach relativ kurzen Betriebszeiten ausgetauscht werden müssen, da sie bei dem sehr robusten Hantieren starken mechanischen Beanspruchungen ausgesetzt sind.

Der Erfindung liegt die Aufgabe zugrunde, einen Verbundschlauch der eingangs genannten Gattung zu finden, der sich durch eine lange Lebensdauer im Betrieb unter den auftretenden hohen Temperaturen gegenüber den bisher bekannten Schläuchen auszeichnet.

Die Erfindung ist im Anspruch 1 gekennzeichnet. Danach wird ein Verbundschlauch, von dem mindestens die Schlauchseele eine Elastomermischung mit folgenden Anteilen (bezogen auf 100 Gewichtsteile):

30 bis 70 Gew.-Teile Ethylen-Acrylat-Kautschuk
20 bis 60 Gew.-Teile Füllstoff und
Rest andere Zusätze zum Fördern von Heißbitumen, Asphalt und Teer mit Temperaturen bis zu mindestens 230°C verwendet. Dabei empfiehlt es sich, wenn die Elastomermischung 30 bis 40 Gew.-Teile anderer Zusätze, darunter Kieselsäure, aufweist. Besondere Vorteile bietet die Verwendung eines haftungsverbessernden Zusatzes von etwa 10 Gew.-Teile gefällter Kieselsäure.

Die offenmaschige Verstärkung sollte aus einem Polyamidgeflecht bestehen.

Darüber hinaus empfiehlt es sich, wenn zwischen der Schlauchseele und der Schlauchdecke mindestens eine Zwischenschicht aus ebenfalls einer Elastomermischung auf der Basis eines Ethylen-Acrylat-Elastomers eingebettet ist. In die Zwischenschicht sollte eine Wendel — auch "Spirale" genannt — aus insbesondere Stahl eingebettet sein.

Besondere Vorteile bietet die Elastomermischung, wenn sie

40 bis 60 Gew.-Teile Ethylen-Acrylat-Kautschuk aufweist.

Der Verbundschlauch nach der Erfindung befriedigt voll hinsichtlich der Eigenschaften, die an Schläuche zum Fördern von Heißbitumen, Asphalt oder Teer gestellt werden. Im Rahmen der Erfindung wurde nämlich festgestellt, daß eine derartige Elastomermischung nicht nur die gewünschte, lang anhaltende Beständigkeit gegen hohe Temperaturen bis zu 230°C und gegen Temperaturschwankungen in einem großen Bereich aufweist, sondern auch die chemische Beständigkeit gegen Heißbitumen, heißen Asphalt und Teer, wie sie insbesondere die Schlauchseele verlangt. Abgesehen davon sind bei dieser Elastomermischung hervorragende mechanische Eigenschaften, wie beispielsweise gute Kerbzähigkeit, die ebenfalls für eine lange Lebensdauer des Schlauches mitverantwortlich sind, gegeben.

Der erfindungsgemäße Schlauch wird somit den an diesen Schlauchtyp gestellten hohen Anforderungen gerecht und weist eine um ein Vielfaches höhere Lebensdauer als die bekannten Schlauchtypen zum Fördern von Heißbitumen, Asphalt oder Teer auf.

Als besonders vorteilhaft hat es sich erwiesen, wenn als Verstärkung zumindest eine nicht voll bedeckende Einlage aus einem hoch temperaturbeständigen und hochfesten Material vorgesehen ist. Hierdurch ist eine Durchsetzung jeder Verstärkungseinlage mit Elastomermaterial gewährleistet, wodurch eine sehr gute Haftung zwischen aneinandergrenzender Elastomerschichten erzielbar ist. Dieser Vorteil ist insbesondere dann gegeben, wenn die Verstärkungseinlage von einem offenmaschigen Geflecht gebildet ist. Durch den Einsatz eines Geflechtes als Verstärkungseinlage(n) sind die bei den Schlauchkonstruktionen gemäß des Standes der Technik auftretenden Probleme mit der Haftung Elastomerschichten/ Verstärkungseinlagen wesentlich vermindert. Das ist insbesondere auch auf die sehr gute Einbettung des Geflechtes im Elastomer zurückzuführen.

Es ist besonders vorteilhaft, wenn als offenmaschiges Geflecht für die Verstärkungseinlage(n) ein Aramid eingesetzt wird. Aramid ist nicht nur ein hoch temperaturbeständiges, sondern auch ein hochfestes Material und daher bevorzugt geeignet.

Für die Schlauchdecke und Zwischenschichten wird vorzugsweise ein und dieselbe Elastomermischung eingesetzt. Da diese Elastomermischung auf der Basis des Ethylen-Acrylat-Elastomers zusätzlich noch eine hohe Ozon-, Witterungs- und Abriebsbeständigkeit aufweist, ist sie als Material für die Schlauchdecke bestens geeignet. Durch die Verwendung sehr ähnlicher oder auch ein und derselben Elastomermischung(en) für die Elastomerschichten des Schlauches ist ein im wesentlichen homogener Schlauchaufbau gegeben. Dieser wirk sich dadurch günstig aus, daß die unter dem Einfluß höherer Temperatur auftretende Volumenquellung in ähnlichem bzw. gleichem Ausmaß erfolgt, was zusätzlich ein lange Lebensdauer des Schlauches begünstigt. Liegen nämlich, wie bei den herkömmlichen Schläuchen dieses Typs, unterschiedliche Elastomermischungen aufeinander, so bewirkt die auch unterschiedliche Volumenquellung Spannungen, die ein Ablösen der Schichten voneinander begünstigt.

Durch einen Zunstz von Kieselsäure wird eine sehr gute Haftung der Elastomerschichten zu den Verstärkungseinlagen und zu einer gegebenenfalls eingebetteten, die Knickbeständigkeit des Schlauches erhöhende Stahleinlage bzw. Wendel oder Spirale bewirkt. Es sind also keine gesonderten Maßnahmen zur Vermittlung der Haftung mehr erforderlich, auch die mit herkömmlichen Haftvermittlern bestehenden Probleme bezüglich deren nicht so hohen Temperaturbeständigkeit sind nicht mehr gegeben.

Neben den oben genannten Anteilen der Elastomermischung enthält diese selbstverständlich noch Alterungsschutzmittel, Vernetzungsmittel, Beschleuniger und Verarbeitungshilfsmittel.

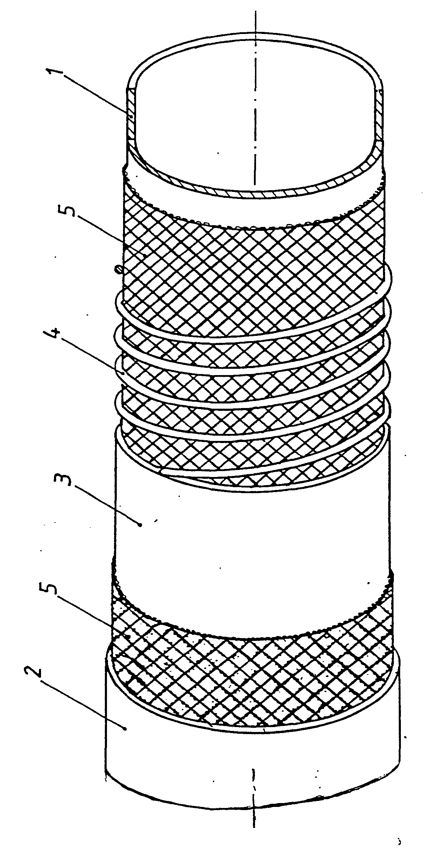

Weitere Merkmale, Vorteile und Einzelheiten der Erfindung werden nun anhand der Zeichnung, die ein Ausführungsbeispiel des erfindungsgemäßen Schlauches darstellt, näher beschrieben. Hiebei ist in der einzigen Zeichnungsfigur ein Teilstück des Schlauches in Schrägansicht, schichtweise abgedeckt, dargestellt.

Gemäß der Zeichnung besteht der Schlauch aus einer Schlauchseele 1, einer Schlauchdecke 2 und einer Zwischenschicht 3, die jeweils aus einem Elastomer bestehen. In die Zwischenschicht 3 ist einer aus Stahl bestehende Wendel 4 gelegentlich im Fachjargon auch "Spirale" genannt eingebettet, die die Knickbeständigkeit der Schlauchkonstruktion unterstützt. Zwischen der Zwischenschicht 3 und der Schlauchseele 1 bzw. der Schlauchdecke 2 befindet sich als Einlage je eine Verstärkung 5.

Zumindest die Schlauchseele 1 besteht aus der Elastomermischung auf der Basis eines Ethylen-Acrylat-Elastomer. Eine derartige Elastomermischung zeichnet sich unter anderem durch eine Beständigkeit gegen hohe Temperaturen und Temperaturschwankungen und durch eine hohe Witterungs-, Ozon- und Abriebsbeständigkeit aus. Im Rahmen der Erfindung wurde nun festgestellt, daß Ethylen-Acrylat-Kautschuk eine hohe chemische Beständigkeit gegen Heißbitumen oder flüssigen Asphalt und Teer aufweist, wobei auch die erforderliche Temperaturbeständigkeit bis in einen Bereich von mindestens 230°C gegeben ist.

Bevorzugt wird eine solche Elastomermischung für jede der Schichten des Schlauches eingesetzt, wodurch ein weitgehend homogener Aufbau des Schlauches gewährleistet ist, was insbesondere die bei herkömmlichen Schläuchen für diesen Verwendungszweck bestehenden Probleme, die aus einer unterschiedlichen Volumsquellung unter Einfluß hoher Temperaturen resultieren, nämlich der Gefahr der Ablösung der einzelnen Schichten bzw. Einlagen voneinander, wesentlich vermindert.

Die Verstärkungen 5 werden bevorzugt von einem Aramidgeflecht gebildet. Die besondere Eignung von Aramid ist in der hohen Temperaturbeständigkeit und der hohen Festigkeit dieses Materials begründet. Das Aramidgeflecht selbst bildet ein relativ offenmaschiges Gebilde, wird daher gut von der beidseitig vorliegenden, vorzugsweise gleichen oder gleichartigen Elastomermischungen durchsetzt, wodurch eine Verbindung der beiden Elastomerschichten sozusagen durch Verschweißung und damit eine gute Haftung der Schichten sowohl zueinander als auch zur Verstärkung 5 leicht erzielbar ist.

Keinerlei gesonderte Maßnahmen zur Haftung, wie beispielsweise mittels herkömmlicher Haftvermittler, der einzelnen Schichten und Einlagen aneinander sind dann erforderlich, wenn der Elastomermischung, beispielsweise Kieselsäure als haftungsverbessernder Zusatz beigemengt ist.

Der Kieselsäureanteil in der Mischung bewirkt eine sehr gute Haftung zu dem in der Zwischenschicht 3 eingebetteten Stahldraht sowie zum Aramidgeflecht.

Die bekannten und herkömmlichen Haftvermittler haben außerdem den Nachteil, daß sie gegen hohe Temperaturen nur beschränkt beständig sind und somit die Lebensdauer der Schlauches, der insbesondere zum Fördern von Heißbitumen vorgesehen ist, reduzieren. Die durch den Kieselsäureanteil erzielbare hohe Haftung ist daher auch dann gewährleistet, wenn unter dem Einfluß des durch den Schlauch geförderten heißen Mediums eine gewisse Volumenquellung der Elastomermischung auftritt.

Die für die einzelnen Schichten des Schlauches eingesetzte Elastomermischung enthält, bezogen auf 100 Gewichtsteile, bevorzugt 40 bis 60 Gewichtsteile Ethylen-Acrylat-Kautschuk, 20 bis 60 Gewichtsteile Füllstoffe und gegebenenfalls andere Zusätze, wie beispielsweise Kieselsäure mit einem Anteil von etwa 10 Teilen, ferner die weiteren Zusatzstoffe, wie Alterungschutzmittel, Vernetzungssystem (Vernetzungsmittel, Beschleuniger) und Verarbeitungshilfsmittel.

Abweichend von der dargestellten Ausführungsform können auch eine oder mehr als zwei als Verstärkungen 5 die werde inlagen und auch eine größere Anzahl von Elastomerschichten im Schlauch angeordnet werden. Es ist auch denkbar, auf die Stahlverstärkung zu verzichten. Anstelle von Geflecht ist auch eine als Wende ausgebildete inlage einsetzbar. Als Material für die Verstärkungseinlagen können auch Glas, keramische Fasern oder Carbonfasern verwendet werden.

**Patentansprüche**

1. Verwendung eines Verbundschlauches mit einer Schlauchseele (1) aus einer Elastomermischung auf der Basis eines Ethylen-Acrylat-Elastomers, einer eingebetteten offenmaschigen Verstärkung (5) und einer Schlauchdecke (12) aus elastomerem Material als Förderschlauch zum Fördern von Heißbitumen, Asphalt und Teer mit Temperaturen biz zu mindestens 230°C mit der Maßgabe, daß zumindest die Elastomermischung der Schlauchdecke, bezogen auf 100 Gew.teile, folgende Anteile aufweist:

30—70 Gew.teile Ethylen-Acrylat-Kautschuk
20—60 Gew.teile Füllstoffe
Rest andere Zusätze

2. Verwendung eines Verbundschlauches nach Anspruch 1 mit der Maßgabe, daß die Elastomermischung

30—40 Gew.teile andere Zusätze, darunter Kieselsäure aufweist.

3. Verwendung eines Verbundschlauches nach Anspruch 1 und 2 mit der Maßgabe, daß die Elastomermischung als haftungsverbessernden Zusatz etwa 10 Gew.teile gefällte Kieselsäure aufweist.

4. Verwendung eines Verbundschlauches nach Anspruch 1 mit der Maßgabe, daß die offenmaschige Verstärkung (5) aus einem Aramidgeflecht besteht.

5. Verwendung eines Verbundschlauches nach Anspruch 1 mit der Maßgabe, daß zwischen der Schlauchseele (1) und der Schlauchdecke (2) mindestens eine Zwischenschicht (3) aus ebenfalls einer Elastomermischung auf der Basis eines Ethylen-Acrylat-Elastomers eingebettet ist.

6. Verwendung eines Verbundschlauches nach Anspruch 1 und 5 mit der Maßgabe, daß in die Zwischenschicht (3) eine Stahlwendel (4) eingebettet ist.

7. Verwendung eines Verbundschlauches nach Anspruch 1 mit der Maßgabe, daß die Elastomermischung

40—60 Gew.teile Ethylen-Acrylat-Kautschuk aufweist.

**Revendications**

1. Utilisation d'un flexible composite comprenant une âme (1) en un mélange d'élastomères à base d'un élastomère d'éthylène-acrylate, un renfort (5) à mailles ouvertes, noyé dans la masse, ainsi qu'une gaine (12) en un élastomère, en tant que flexible de distribution de bitume chaud, d'asphalte et de goudron à des températures jusqu'à au moins 230°C, caractérisée par le fait qu'au moins le mélange d'élastomères de l'âme du flexible présente, rapporté à 100 parts pondérales, les proportions suivantes:

30—70 parts pondérales de caoutchouc d'éthylène-acrylate
20—60 parts pondérales de charges et autres adjuvants constituant la part restante.

2. Utilisation d'un flexible composite, selon la revendication 1, caractérisée par le fait que le mélange d'élastomères renferme

30—40 parts pondérales d'autres adjuvants, parmi lesquels de l'acide silicique.

3. Utilisation d'un flexible composite, selon les revendications 1 et 2, caractérisée par le fait que le mélange d'élastomères renferme, en tant qu'adjuvant améliorant l'adhérence, environ 10 parts pondérales d'acide silicique précipité.

4. Utilisation d'un flexible composite, selon la revendication 1, caractérisée par le fait que le renfort (5) à mailles ouvertes consiste en un tressage d'aramide.

5. Utilisation d'un flexible composite, selon la revendication 1, caractérisée par le fait qu'au moins une couche intercalaire (3), également constituée d'un mélange d'élastomères à base d'un élastomère d'éthylène-acrylate, est noyée entre l'âme (1) et la gaine (2) dudit flexible.

6. Utilisation d'un flexible composite, selon les revendications 1 et 5, caractérisée par le fait qu'une hélice (4) en acier est noyée dans la couche intercalaire (3).

7. Utilisation d'un flexible composite, selon la revendication 1, caractérisée par le fait que le mélange d'élastomères renferme

40—60 parts pondérales de caoutchouc d'éthylène-acrylate.

## Claims

1. Use of a compound hose comprising a hose core (1) made of an elastomeric mixture based on an ethylene-acrylate elastomer, an embedded, open-meshed reinforcement (5) and a hose cover (12) made of elastomeric material as a conveying hose for the conveyance of hot bitumen, asphalt and tar at temperatures of up to at least 230°C, characterised in that at least the elastomeric mixture of the hose cover contains the following constituents, relative to 100 parts by weight:

30—70 parts by weight ethylene-acrylate-rubber

20—60 parts by weight fillers

remainder other additives

2. Use of a compound hose as claimed in Claim 1, characterised in that the elastomeric mixture contains:

30—40 parts by weight other additives, including silicic acid.

3. Use of a compound hose as claimed in Claim 1 and 2, characterised in that the elastomeric mixture contains approximately 10 parts by weight of precipitated silicic acid as adhesion-improving additive.

4. Use of a compound hose as claimed in Claim 1, characterised in that the open-meshed reinforcement (5) consists of an aramide braid.

5. Use of a compound hose as claimed in Claim 1, characterised in that at least one intermediate layer (3) likewise composed of an elastomeric mixture based on an ethylene-acrylate-elastomer is embedded between the hose core (1) and the hose cover (2).

6. Use of a compound hose as claimed in Claim 1 and 5, characterised in that a steel coil (4) is embedded in the intermediate layer (3).

7. Use of a compound hose as claimed in Claim 1, characterised in that the elastomeric mixture comprises

40—60 parts by weight ethylene-acrylate-rubber.